# EUROPEAN PATENT APPLICATION

(11) **EP 2 518 661 A2**
(43) Date of publication of application: **31.10.2012**
(21) Application number: 11169962.5
(22) Date of filing: 15.06.2011
(51) Int. Cl.: G06K 9/00

(54) **System and method for human detection and counting using background modeling, hog and haar features**

(30) Priority: 29.04.2011 IN MU13592011
(71) Applicant: Tata Consultancy Services Limited, 400021 Mumbay (IN)
(72) Inventor: Sinha, Aniruddha, 700091 Kolkata (IN); Gupta, Rohit, 700091 Kolkata (IN); Chaki, Ayan, 700091 Kolkata (IN); Pal, Arpan, 700091 Kolkata (IN)
(74) Representative: Meissner, Bolte & Partner

(57) **Abstract**

A system for adaptive learning based human detection for channel input of captured human image signals, the said system comprises of: a sensor for tracking real time images of environment of interest; a feature extraction and classifiers generation means for extracting a plurality of the features and classifying the features associated with time-space descriptors of image comprising background modeling, Histogram of Oriented Gradients (HOG) and Haar like wavelet; a processor configured to process extracted feature classifiers associated with plurality of real-time images; a means for combining plurality of feature classifiers of time-space descriptors; a means for evaluating linear probability of human detection based on predetermined threshold value of feature classifier in a time window having at least one image frame; a counter for counting the number of human in the image; and a transmission means adapted to send the final human detection decision and number thereof to storage means.

## Description

### FIELD OF THE INVENTION

The present invention relates to a system and method for image information processing, and more particularly relates to a precise human detection by distinguishing the target object from background by combining different algorithms.

### BACKGROUND OF THE INVENTION

Human detection techniques in an image or video typically employ a traditional method of background modeling. Human detection have significance in various field, particularly in security and surveillance applications, where automatic human body detection is a key enabler, e.g., for applications in robotics, surveillance, and Intelligent Transport System (autonomous vehicle and automatic driver-assistance system).

For any object detection in an image, the image signals are processed for training set based classification, feature extraction for feature vector and principal component analysis, pattern recognition and wavelet transformation for employing convolution. For human detection, the extracted feature classifiers associated with the image are processed particularly employing Histogram of Oriented Gradient (HOG) for human detection and Haar wavelet transformation technique for face detection,

In the human detection techniques disclosed hitherto, the contour features obtained from the objects by extracting edges are employed as important features. In general, in the human detection techniques disclosed in the prior art, human detection and image processing takes place through supervised learning using training data set of small edge regions and hierarchical supervised learning thereof.

However, probability of detection of human subjected to various unfavorable conditions that includes distorted image signals, background mix-up with object and human posture unavailability in the training data set, is significantly poor. A Haar like wavelet transformation though offers a formidable face detection technique in differential convolution analysis, however, suffers from higher threshold value associated with extracted features. Another impediment to precise human and face detection is wide variability of data objects in the images.

A quality of an object detection system depends on the feature extraction; amongst others a Haar-Like feature provides enhanced features for object detection. In field of car detection, combination of Haar-Like feature and HOG is a way to encode an input image to obtain a vector of visual descriptors. Haar-Like features and concept of Region of Interest (ROI) are observed to significantly increase probability of object detection. However, time and space considerations for detection of certain advance descriptors and use thereof along with HOG and Haar is not substantially disclosed in the prior art.

There are plurality of techniques and algorithms taught in the prior art for detection of human using Support Vector Machine (SVM) based HOG features and human face detection using SVM based Haar features and background modeling (BG). However, these algorithms individually work and produce good results on a limited data set and mostly for color images.

Some of the prior-arts known to us which deal in addressing the above mentioned problems are as mentioned below:

United States Patent number 7373012 filed by Avidan et al teaches about a computer implemented method that models a background in a sequence of frames of a video. For each frame, the method detects static corners using an array of pixels of the frame, and extracts, for each static corner, features from a window of pixels around the static corner. For each static corner, a descriptor is determined from the corresponding features. Each static corner and corresponding descriptor is stored in a memory, and each static corner is classified as a background or foreground according to the descriptor to model a background in the video.
Zoran Zivkovic in "Improved Adaptive Gaussian Mixture Model for Background Subtraction" discloses about development of an efficient adaptive algorithm using Gaussian mixture probability density. Recursive equations are used to constantly update the parameters and but also to simultaneously select the appropriate number of components for each pixel.

Frey et al in "A Comparison of Algorithms for Inference and Learning in Probabilistic Graphical Models" discloses the use of graph-based probability models and their associated inference and learning algorithms. Also, Frey et al review the exact techniques and various approximate, computationally efficient techniques, including iterated conditional modes, the expectation maximization (EM) algorithm, Gibbs sampling, the mean field method, variational techniques, structured variational techniques and the sum-product algorithm ("loopy" belief propagation). Further, Frey et al describe how each technique can be applied in a vision model of multiple, occluding objects and contrast the behaviors and performances of the techniques using a unifying cost function, free energy.

Mei Xiao in "An Improved Background Reconstruction Algorithm Based on Basic Sequential Clustering" discloses that based on the assumption that background appears with large appearance frequency, a new background reconstruction algorithm based on basic sequential clustering is proposed. First, pixel intensity in period of time is classified based on mend basic sequential clustering. Second, merging procedure and reassignment procedure are run to classified classes. Finally, pixel intensity classes, whose appearance frequencies are higher than a threshold, are selected as the background pixel intensity value. So the improved algorithm can rebuilt the background images of various scenes.

Fazli et al in "A novel GMM-Based Motion Segmentation Method for complex Background" discloses an approach to detect moving objects in a complex background. Gaussian mixture model (GMM) is an effective way to extract moving objects from a video sequence. However, the conventional mixture Gaussian method suffers from false motion detection in complex backgrounds and slow convergence. Also, Fazli et al proposes a novel approach, which combines a modified adaptive GMM for background subtraction and Neighborhood-based difference and Overlapping-based classification method in order to achieve robust and accurate extraction of the shapes of moving objects.

Lou et al in "An Illumination Invariant Change Detection Algorithm" discloses a homomorphic filtering based change detection algorithm is proposed to detect moving objects from light-varying monocular image sequences. In the proposed approach, a background model is first constructed, and background subtraction is applied to classify image pixels into background or foreground. Also, Lou et al utilize illumination invariant local components to model the background, which are obtained using homomorphic filtering. Threshold for every pixel in the image can be selected automatically to accommodate the change of lighting. In addition, the connectivity information is integrated into the background-foreground classification process by Bayesian estimation. McHugh et al in "Foreground-Adaptive Background Subtraction" discloses the adaption of a threshold to varying video statistics by means of two statistical models. In addition to a nonparametric background model, McHugh et al introduce a foreground model based on small spatial neighborhood to improve discrimination sensitivity. Also, McHugh et al apply a Markov model to change labels to improve spatial coherence of the detections.

Parks et al in "Evaluation of Background Subtraction Algorithms with Post-Processing" discloses an evaluation of several popular, state-of-the-art BGS algorithms and examining how post-processing techniques affect their performance. The experimental results demonstrate that post-processing techniques can significantly improve the foreground segmentation masks produced by a BGS algorithm. Also, Parks et al provide recommendations for achieving robust foreground segmentation based on the lessons learned performing this comparative study.

Tuzel et al in "Pedestrian Detection via Classification on Riemannian Manifolds" discloses a new algorithm to detect pedestrian in still images utilizing covariance matrices as object descriptors. Since the descriptors do not form a vector space, well known machine learning techniques are not well suited to learn the classifiers. The space of d-dimensional nonsingular covariance matrices can be represented as a connected Riemannian manifold. Also, Tuzel et al proposes a novel approach for classifying points lying on a connected Riemannian manifold using the geometry of the space.

Stauffer et al in "Adaptive background mixture models for real-time tracking" discloses modeling of each pixel as a mixture of Gaussians and using an on-line approximation to update the model. The Gaussian distributions of the adaptive mixture model are then evaluated to determine which are most likely to result from a background process. Each pixel is classified based on whether the Gaussian distribution which represents it most effectively is considered part of the background model.

Some of the lacunae that exists in the prior art discussed above are that, a single Background Modeling (BG) algorithm does not work for all the types of background and also with changing background. Moreover, if the color of the dress of the person is similar to the background then the probability of detection reduces considerably. In case of infrared (IR) images, color information is not present and hence the BG works on gray level images (single channel information), hence the performance of BG is not to the appreciable level.

In training set based systems, the SVM based HOG features classifier requires training with 1000s of positive images and 10000s of negative images to achieve a good result. This can never have 100% precision as it is not possible to know all possible human postures and will have some false positives. The major problem lies in the training data set where the postures of the people can be of various types and when tested with new images with a new environment it will have always have some errors in detecting the people.

The SVM based Haar feature classifier for face detection works well for color images and whenever the face area in the image is substantially large. In case of IR images, gray scale images and when people are sitting far from the sensor (the faces covering 50x50 pixels or less) than that leads to lot of errors in the detection of the face.

Thus there exists a need to have system and method for adaptive learning based human detection for improving background modeling (BG), HOG and Haar features detection performance

### SUMMARY OF THE INVENTION

Before the present systems and methods, enablement are described, it is to be understood that this invention is not limited to the particular systems, and methodologies described, as there can be multiple possible embodiments of the present invention and which are not expressly illustrated in the present disclosures. It is also to be understood that the terminology used in the description is for the purpose of describing the particular versions or embodiments only, and is not intended to limit the scope of the present invention which will be limited only by the appended claims.

The principle objective of the present invention is to provide system and method for adaptive learning based human detection and counting using adaptive background modeling (BG), HOG and Haar features.

Another objective of the invention is to perform the image enhancements in a Region of Interest (ROI) where the BG has detected a change so that the further signal processing for human detection can perform better.

Another objective of the invention is to derive and reconstruct the background from no prior information about the background for real time systems.

Yet another objective of the invention is to improve a combined probability of detecting a human i.e. classification based on the output of BG, human detection algorithm and face detection algorithm.
Still another objective of the invention is to combine the BG, HOG and Haar output over space and time to take a collective decision on the presence of human.

In one aspect of the invention a method for an adaptive learning based human detection is configured for at least one channel input of captured human image signals in order to detect and count the numbers of human present in an indoor or outdoor environment for security and surveillance applications, wherein the channel input of captured human image signals comprises of Infrared (IR) image or color image.

In another aspect of the invention, initially, a plurality of window frames of real time images associated with at least one human is acquired by employing at least one sensor, wherein the images capturing an indoor or outdoor environment associated with the human. In one exemplary embodiment, the sensor can be any one of Infrared (IR) sensor, color camera, or at least one interference sensor.

Upon acquiring the plurality of window frames of real time images, an adaptive learning based human detection system extracts features classifiers and combines the extracted feature classifiers of time or spatial domain based descriptors, evaluates a linear probability of human detection based on predetermined threshold value of feature classifiers, counts the number of human in the acquired image and sends the final human detection decision and number thereof to at least one actionable or storage means for security and surveillance purposes.

In one aspect of the invention, a feature extraction and classifiers generation means of the system extracts a plurality of features and classify the extracted features associated with time or spatial domain based descriptors of image, wherein the features comprises of background modeling, Histogram of Oriented Gradients (HOG) and Haar like wavelet.

In another aspect of the invention, a processor of the system is configured to process the extracted feature classifiers associated with plurality of real-time images, wherein the process can be any known signal processing operations in order to detect the presence of at least one human in the image. The said processor can be any one of the computer, Laptop, PDA, Microcontroller, Microprocessor or any other computational device.

Upon processing the features, a means of the system combines the plurality of feature classifiers of time or spatial domain based descriptors, wherein the features comprises of background modeling, Histogram of Oriented Gradients (HOG) and Haar like wavelet.

Upon combining the plurality of feature classifiers, a means of the system evaluates a linear probability of human detection based on predetermined threshold value of feature classifier in at least one window frame of the image, wherein the evaluation can be comparison of the threshold associated with the combined output of the feature classifiers generated from BG, HOG and Haar with the predefined threshold for human detection decision making. In a preferred embodiment, the said predefined threshold can be obtained by combining the weaker classifier associated with the image due to long distance image capture, color of the image and lesser face exposure, etc.

In another aspect of the invention a counter of the system counts the number of human in the image upon evaluating the linear probability of human detection, wherein the counter can be any one of the generally known counter.

In another aspect of the invention a transmission means of the system is adapted to send the final human detection decision and number thereof in at least one image of real time human tracking to at least one actionable or storage means for security and surveillance purposes, wherein the transmission means can be any one of the generally known transmission means. In a preferred embodiment, the said actionable or storage means is a remote server.

The above proposed system and method disclosed for human detection can be easily extended to include detection of any other object, counting thereof within the spirit of the invention for the person skilled in the art.

### BRIEF DESCRIPTION OF THE DRAWINGS

The foregoing summary, as well as the following detailed description of preferred embodiments, are better understood when read in conjunction with the appended drawings. For the purpose of illustrating the invention, there is shown in the drawings exemplary constructions of the invention; however, the invention is not limited to the specific methods and system disclosed. In the drawings:
Figure 1 shows system architecture for the human detection, tracking and counting according to multiple embodiments of the invention.
Figure 2 illustrates a method of combining BG, HOG and Haar with respect to region of interest in cascaded form according to one exemplary embodiment of the invention.
Figure 3 illustrates a method of combining BG, HOG and Haar with respect to region of interest in parallel form according to another exemplary embodiment of the invention.
Figure 4 illustrates a method of combining BG, HOG and Haar with respect to region of interest in time according to another exemplary embodiment of the invention.
Figure 5 illustrates a method for updation of BG model using the region of interest of HOG and Haar according to another exemplary embodiment of the invention.

### DETAILED DESCRIPTION OF THE INVENTION

Some embodiments of this invention, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items, It must also be noted that as used herein, the singular forms "a," "an," and "the" include plural references unless the context clearly dictates otherwise. Although any systems and methods similar or equivalent to those described herein can be used in the practice or testing of embodiments of the present invention, the preferred, systems and methods are now described. The invention will now be described with reference to the accompanying drawing which does not limit the scope and ambit of the invention.

The present invention provides a system and method for adaptive learning based human detection and counting using adaptive background modeling (BG), HOG and Haar features.

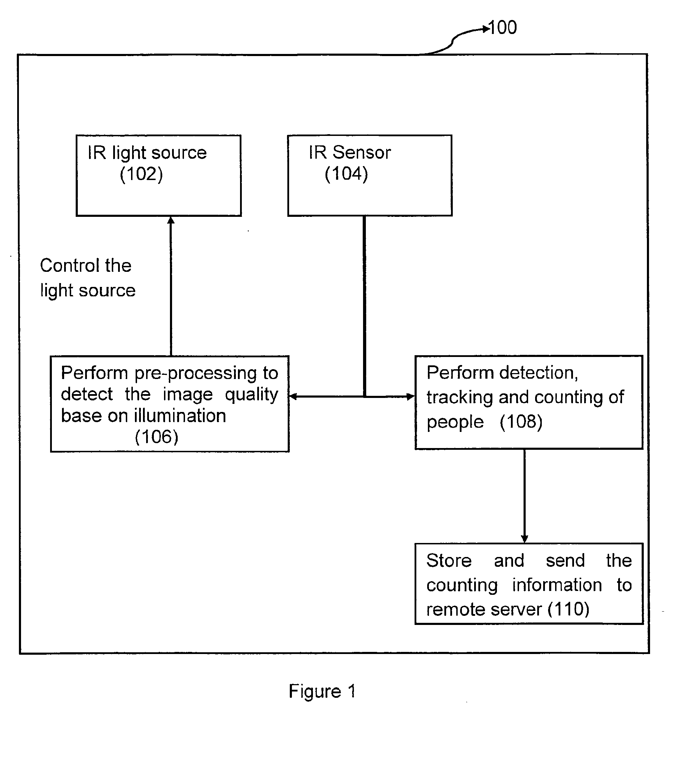

Figure 1 shows system architecture **100** for the human detection, tracking and counting according to multiple embodiments of the invention. According to one exemplary embodiment of the invention, a system **100** comprises of a light source **102**, a sensor **104**, a remote server **110**, a processor **112** (not shown in the figure), a feature extraction and classifiers generation means **114** (not shown in the figure), combining means **116** (not shown in the figure), evaluation means **118** (not shown in the figure), a counter **120** (not shown in the figure) and transmission means **122** (not shown in the figure). The said light source **102** is selected based on the sensor **104,** wherein the sensor **104** is selected from the IR sensor, color camera, and at least one interference sensor, etc. In a preferred embodiment of the invention, the said light source **102** is Infrared (IR) light source and the sensor **104** is IR sensor **104**. The said light source **102,** IR sensor **104**, remote server **110**, feature extraction and classifiers generation means **114**, combining means **116,** evaluation means **118**, counter **120** and transmission means **122** are connected to the processor **112** by a communication network, wherein the communication network is selected from the internet, intranet, WAN, LAN, MAN, etc. In a preferred embodiment of the invention, the communication network is LAN. According to another embodiment of the invention, the static color camera can be used to extract color images instead of extracting the IR images by using the IR light source **102** and the IR sensor **104** for detecting in the indoor and/or outdoor environment. The said processor **112** is selected from the computer, Laptop, PDA, Microcontroller, Microprocessor or any other computational device. In a preferred embodiment of the invention, the processor **112** is computer.

Initially, the IR light source **102** is initiated to illuminate the IR rays by the processor **112** continuously in the indoor and/or outdoor environment. According to one exemplary embodiment of the invention, the IR light source **102** is located in the outdoor environment. The IR sensor **104** continuously senses the reflection from the object present in the outdoor environment and/or captures the image information for human detection, wherein the object can be human, tree, traffic sign, and any other objects and sends the reflection to the processor **112.** In a preferred embodiment, the said object is human.

Upon receiving the reflection, the processor **112** performs pre-processing **106** to detect the image quality based on illumination. If the image quality is less than the set value by the processor **112,** then subsequently the processor **112** controls the IR light source **102** until the image quality reaches the value is equal to the set value. If the image quality is equal or more than the set value, then the system **100** performs detection, tracking and counting of people **108.**

Upon acquiring the plurality of window frames of real time images, the feature extraction and classifiers generation means **114** extracts a plurality of features classifiers and classify the extracted features associated with the time or spatial domain based descriptors of image, wherein the features comprises of background modeling, Histogram of Oriented Gradients (HOG) and Haar like wavelet.

Upon classification of the features, the processor **112** is configured to process extracted feature classifiers associated with plurality of real-time images, wherein the process can be any known signal processing operations in order to detect the presence of at least one human in the image. The means **116** is used for combining plurality of feature classifiers of time or spatial domain based descriptors, wherein the features comprises of background modeling, Histogram of Oriented Gradients (HOG) and Haar like wavelet.

Upon combining the plurality of feature classifiers of time or spatial domain based descriptors, the means **118** evaluates a linear probability of human detection based on predetermined threshold value of feature classifier in at least one window frame of the image. In a preferred embodiment, the evaluation is a comparison of the threshold associated with the combined output of the feature classifiers generated from BG, HOG and Haar with the predefined threshold for human detection decision making. The said predefined threshold can be obtained by combining the weaker classifier associated with the image due to long distance image capture, color of the image and lesser face exposure, etc.

The counter **120** counts the number of human in the image upon evaluating the linear probability of human detection, wherein the counter **120** can be any one of the generally known counter. Finally, the transmission means **122** is adapted to send the final human detection decision and number thereof in at least one image of real time human tracking to at least one actionable or storage means **110** for security and surveillance purposes, wherein the transmission means **122** can be any one of the generally known transmission means. In a preferred embodiment of the invention, the actionable or storage means **110** is remote server **110.**

The above said detection, tracking and counting of people **108** can be done by the system **100** in various methods. The said methods are explained below in the subsequent drawings 2, 3, 4 & 5 respectively.

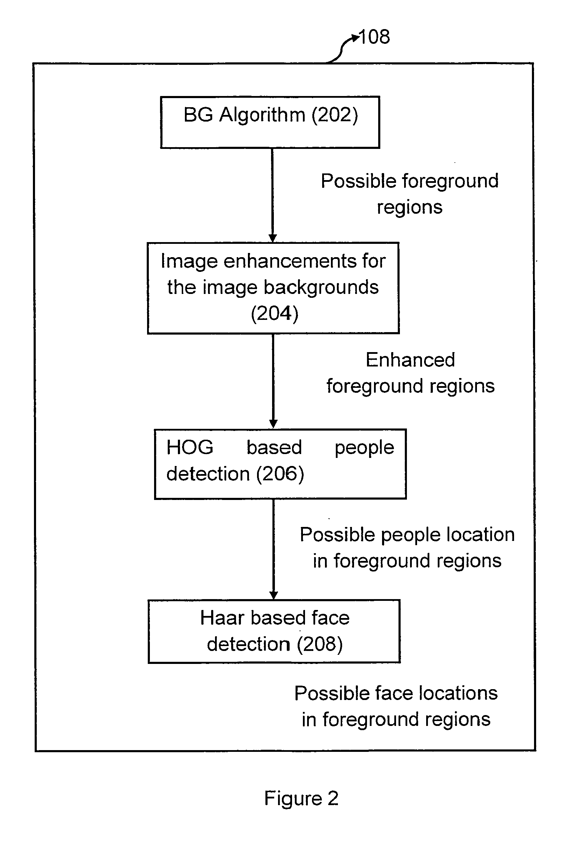

Figure 2 illustrates a method **108** of combining BG, HOG and Haar with respect to region of interest in cascaded form according to one exemplary embodiment of the invention. In the initial step of the proposed method, a plurality of window frames of real time images associated with at least one human is acquired by employing at least one sensor **104,** wherein the images capturing an indoor or outdoor environment associated with the human. In one exemplary embodiment, the sensor **104** can be any one of Infrared (IR) sensor, color camera, or at least one interference sensor.

In the next step **202**, upon acquiring the plurality of window frames of real time images, a foreground associated with the image disposed in at least one window frame of the image is captured, wherein a background modeling (BG) means adapted to derive a background from the image.

In the next step **204,** at least one quality parameter of the image around the captured foreground region is enhanced, wherein the quality parameters associated with the region of interest in the image comprises of pixel data characteristics including contrast, brightness or sharpening. In a preferred embodiment, the quality parameter of the image can be enhanced for the selected regions based on the output of BG in order to reduce the computation resources of the computing system.

In the next step **206,** at least one HOG classifiers for the designated foreground of the image are derived, wherein the HOG classifiers detecting at least one human for first level human detection.

In the next step **208,** at least one Haar classifier is derived upon countering positive first level human detection, wherein the Haar classifiers detecting the face of the human for second level of human detection. In next step, the number of human present in the image can be counted by employing any one of the generally known counter **120.**

In the final step, send the final human detection decision and number thereof in at least one image of real time human tracking is sent to the remote server **110** by employing the any one of the generally known transmission means **122** for security and surveillance purposes.

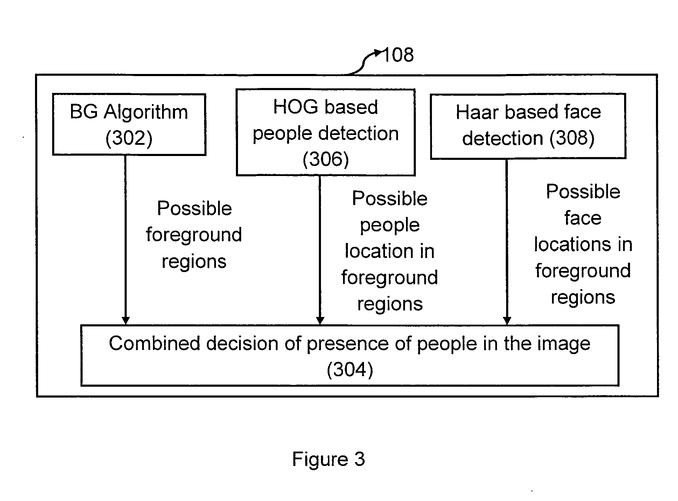

Figure 3 illustrates a method **108** of combining BG, HOG and Haar with respect to region of interest in parallel form according to another exemplary embodiment of the invention. In the initial step of the proposed method, a plurality of window frames of real time images associated with at least one human is acquired by employing at least one sensor **104**, wherein the images capturing an indoor or outdoor environment associated with the human. In one exemplary embodiment, the sensor **104** can be any one of Infrared (IR) sensor, color camera, or at least one interference sensor.

Upon acquiring the plurality of window frames of real time images, a foreground **302** associated with the image disposed in at least one window frame of the image is captured, wherein a background modeling (BG) means adapted to derive a background from the image. Subsequently, at least one HOG classifiers for the designated foreground of the image are derived, wherein the HOG classifiers detecting the presence of at least one human **306** in the image.

Subsequently, at least one Haar classifier is derived, wherein the Haar classifiers detecting the face **308** of the human in the image. Next, a plurality of feature classifiers generated from BG, HOG and Haar is combined **304** in spatial domain analysis by employing combining means **116,** wherein the spatial domain analysis comprises of probability of the pixel containing the human as determined individually by change in background, amount of activity in the image and HOG and Haar output.

In a preferred embodiment, the feature classifiers disposed in the pre-identified area of interest for is used for deriving cues for background, human and face detection and the combining of plurality of feature classifier transforms one or more weak classifiers associated with the image due to long distance image capture, color of the image or lesser face exposure into a strong classifier that does not require training of associated data set for human detection and are configured for provide precise human detection.

In a another embodiment, a threshold associated with the combined output of the feature classifiers generated from BG, HOG and Haar is determined by employing combining means **116** for human detection decision making.

Upon combining the plurality of feature classifiers, a linear probability of human detection based on predetermined threshold value of feature classifier in at least one window frame of the image is evaluated by employing evaluation means **118,** wherein the evaluation can be comparison of the threshold associated with the combined output of the feature classifiers generated from BG, HOG and Haar with the predefined threshold for human detection decision making.

In a preferred embodiment, the said predefined threshold can be obtained by combining the weaker classifier associated with the image due to long distance image capture, color of the image and lesser face exposure, etc.

Next, the number of human present in the image can be counted by employing any one of the generally known counter **120.** In the final step, the final human detection decision and number thereof in at least one image of real time human tracking is sent to the remote server **110** by employing the any one of the generally known transmission means **122** for security and surveillance purposes.

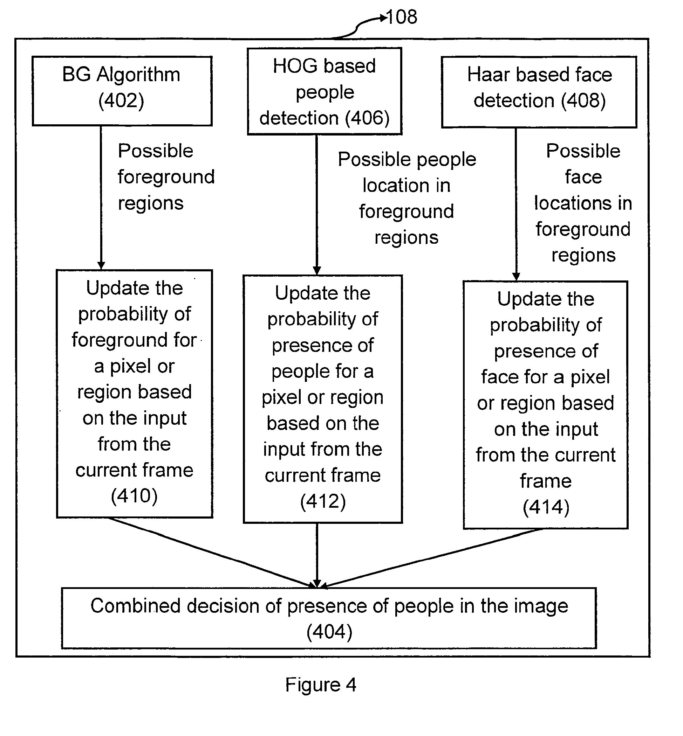

Figure 4 illustrates a method **108** of combining BG, HOG and Haar with respect to region of interest in time according to another exemplary embodiment of the invention. In the initial step of the proposed method, a plurality of window frames of real time images associated with at least one human is acquired by employing at least one sensor **104,** wherein the images capturing an indoor or outdoor environment associated with the human.

In one exemplary embodiment, the sensor **104** can be any one of Infrared (IR) sensor, color camera, or at least one interference sensor. Upon acquiring the plurality of window frames of real time images, a foreground **402** associated with the image disposed in at least one window frame of the image is captured, wherein a background modeling (BG) means adapted to derive a background from the image.

Subsequently, at least one HOG classifiers for the designated foreground of the image are derived, wherein the HOG classifiers detecting the presence of at least one human **406** in the image. Subsequently, at least one Haar classifier is derived, wherein the Haar classifiers detecting the face **408** of the human in the image. Next, a plurality of feature classifiers generated from BG, HOG and Haar is combined **304** in time domain analysis by employing combining means **116,** wherein the time domain analysis comprises of deriving linear probability of each pixel over time associated with the pixels in each window, the threshold value of combined feature classifiers facilitating an intermittent probability evaluation leading to a final decision of presence of the human in the tracked image.

In a preferred embodiment, the feature classifiers disposed in the pre-identified area of interest for is used for deriving cues for background, human and face detection and the combining of plurality of feature classifier transforms one or more weak classifiers associated with the image due to long distance image capture, color of the image or lesser face exposure into a strong classifier that does not require training of associated data set for human detection and are configured for provide precise human detection. In a preferred embodiment, a threshold associated with the combined output of the feature classifiers generated from BG, HOG and Haar is determined by employing combining means **116** for human detection decision making.

Upon combining the plurality of feature classifiers, a linear probability of human detection based on predetermined threshold value of feature classifier in at least one window frame of the image is evaluated by employing evaluation means **118,** wherein the evaluation can be comparison of the threshold associated with the combined output of the feature classifiers generated from BG, HOG and Haar with the predefined threshold for human detection decision making. In a preferred embodiment, the said predefined threshold can be obtained by combining the weaker classifier associated with the image due to long distance image capture, color of the image and lesser face exposure, etc.

Next, the number of human present in the image can be counted by employing any one of the generally known counter **120.** In the final step, the final human detection decision and number thereof in at least one image of real time human tracking is sent to the remote server **110** by employing the any one of the generally known transmission means **122** for security and surveillance purposes.

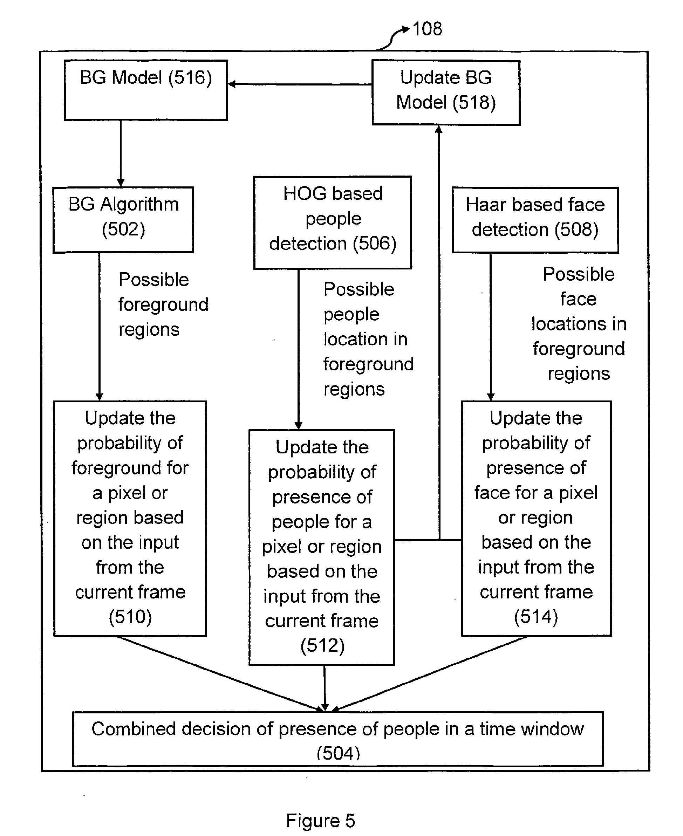

Figure 5 illustrates a method **108** for updation of BG model using the region of interest of HOG and Haar according to another exemplary embodiment of the invention. The method is similar to the method is as explained in the Figure 4. In this method, additionally, a foreground **502** associated with the image disposed in at least one window frame of the image is captured, wherein a background modeling (BG) means adapted to derive a background from the image, in the absence of pre-existing background information, by sequential clustering for background reconstruction. The above said background reconstruction **518** is initiated by weighting the strength of feature classifiers output generated from HOG and Haar. A region of interest in the image based on the background change detection is determined and the background associated with the image is adaptively modeled by weighting the strength of feature classifiers output generated from HOG and Haar, wherein a revised BG adapted to handle plurality of backgrounds and with repeatedly changing background characteristics.
Accordingly, the system **100** uses all these different algorithms and different methods which are mentioned in the Figures 2-5 and it does a good matching technique to detect people.
According to another embodiment of the invention, the challenges are mainly getting the thresholds for the final decision in the presence of the people is over come by using adaptive methodology which is reduced drastically both misses and false positives. Because the exiting algorithm for BG is not performing well with only one channel (gray) of image information. HoG is not performing in a very accurate way due to unavailability of all human postures.

According to another embodiment of the invention, the system **100** does not assume any previous assumptions (either lighting, posture of different persons, static objects movement). So the system **100** is robust and can tackle any environment/background changes. Adaptive learning is being used during the entire process by the system **100.**

The preceding description has been presented with reference to various embodiments of the invention. Persons skilled in the art and technology to which this invention pertains will appreciate that alterations and changes in the described structures and methods of operation can be practiced without meaningfully departing from the principle, scope of this invention.

### ADVANTAGES OF THE INVENTION

The system and method of the proposed invention can be used for
a) Improving the accuracy of detection of people in a variety of environment;
b) Performing detection and counting people in indoor and outdoor environment with static stereo cameras; and
c) Any other object counting, instead of people counting.

## Claims

1. An adaptive learning based human detection method configured for at least one channel input of captured human image signals, the human detection method comprising the steps of:
a) acquiring plurality of window frames of real time images associated with at least one human from at least one light detection sensor, the images capturing an indoor or outdoor environment associated with the human;
b) capturing a foreground associated with the image disposed in at least one window frame of the image, wherein a background modeling (BG) means adapted to derive a background from the image;
c) enhancing at least one quality parameter of the image around the captured foreground region;
d) deriving at least one HOG classifiers for the designated foreground of the image, wherein the HOG classifiers detecting at least one human for first level human detection;
e) deriving at least one Haar classifier upon countering positive first level human detection, wherein the Haar classifiers detecting the face of the human for second level of human detection; and
f) detecting the human present in the plurality of window frames of real time images and counting the number thereof based on the face detection output.

2. The method of claim 1, wherein the quality parameters associated with the region of interest in the said image comprises of pixel data characteristics including contrast, brightness or sharpening.

3. The method of claim 1, wherein enhancing at least one quality parameter of the image can be performed for the selected regions based on the output of BG.

4. An adaptive learning based human detection method configured for at least one channel input of captured human image signals, the human detection method comprising the steps of:
a) acquiring plurality of window frames of real time images associated with at least one human from at least one light detection sensor, the images capturing an indoor or outdoor environment associated with the human;
b) capturing a foreground associated with the image disposed in at least one window frame of the image, wherein a background modeling (BG) means adapted to derive a background from the image;
c) deriving at least one HOG classifiers for the designated foreground of the image, wherein the HOG classifiers detecting the presence of at least one human in the image;
d) deriving at least one Haar classifier, wherein the Haar classifiers detecting the face of the human in the image;
e) combining a plurality of feature classifiers generated from BG, HOG and Haar in spatial domain analysis;
f) determining a threshold, for human detection decision making, associated with the combined output of the feature classifiers generated from BG, HOG and Haar; and
g) generating a combined probability of human detection, the said combined probability being a function of BG, human detection classifiers (HOG classifiers) and face detection classifiers (Haar classifiers).

5. The method of claim 4, wherein the step (e) optionally comprising the step of combining a plurality of feature classifiers generated from BG, HOG and Haar in time domain analysis.

6. The method of claim 4, wherein transforming one or more weak classifiers, due to long distance image capture, color of the image or lesser face exposure, into a strong classifier that does not require training of associated data set for human detection by combining the plurality of feature classifier.

7. The method of claim 4, wherein combining the plurality of feature classifier for transforming one or more weak classifiers associated with the image, due to long distance image capture, color of the image or lesser face exposure, into a strong classifier that does not require training of associated data set for human detection and are configured for provide precise human detection.

8. The method of claim 4, wherein combination of feature classifier provides the threshold for weaker classifier strength for human detection.

9. The method of claim 4, wherein the spatial domain analysis comprises of probability of the pixel containing the human as determined individually by change in background, amount of activity in the image and HOG and Haar output.

10. The method of claim 4, wherein the time domain analysis comprises of deriving linear probability of each pixel over time associated with the pixels in each window, the threshold value of combined feature classifiers facilitating an intermittent probability evaluation leading to a final decision of presence of the human in the tracked image.

11. An adaptive learning based human detection method configured for at least one channel input of captured human image signals, the human detection method comprising the steps of:
a) acquiring plurality of window frames of real time images associated with at least one human from at least one light detection sensor, the images capturing an indoor or outdoor environment associated with the human;
b) capturing a foreground associated with the image disposed in at least one window frame of the image, wherein a background modeling (BG) means adapted to derive a background from the image, in the absence of pre-existing background information, by sequential clustering for background reconstruction;
c) determining a region of interest in the image based on the background change detection;
d) deriving at least one HOG classifiers for the region of interest that excludes the designated foreground of the image, wherein the HOG classifiers detecting the presence of at least one human in the image;
e) deriving at least one Haar classifier for the region of interest, wherein the Haar classifiers detecting the face of the human in the image;
f) combining the feature classifiers generated from BG, HOG and Haar in time domain analysis;
g) adaptively modeling the background associated with the image by weighting the strength of feature classifiers output generated from HOG and Haar, wherein a revised BG adapted to handle plurality of backgrounds and with repeatedly changing background characteristics;
h) determining a threshold, for human detection decision making, associated with the combined output of the feature classifiers generated from BG, HOG and Haar; and
i) generating a combined probability of human detection for the each successive adaptively modeled background during the human tracking, the said combined probability being a function of BG, human detection classifiers (HOG classifiers) and face detection classifiers (Haar classifiers).

12. The method of claim 11, wherein the background reconstruction is initiated by weighting the strength of feature classifiers output generated from HOG and Haar, each feature classifier is associated with the human under tracking and are disposed in the pre-identified area of interest in the image for deriving cues for background, human present and face detection.

13. The method of claim 11, wherein transforming one or more weak classifiers, due to long distance image capture, color of the image or lesser face exposure, into a strong classifier that does not require training of associated data set for human detection by combining the plurality of feature classifier deriving a threshold for weaker classifier strength for a precise human detection.

14. A system for adaptive learning based human detection for at least one channel input of captured human image signals, the said system comprises of:
a) at least one sensor for tracking real time images of environment of interest;
b) a feature extraction and classifiers generation means for extracting a plurality of the features and classifying the features associated with time-space descriptors of image comprising background modeling, Histogram of Oriented Gradients (HOG) and Haar like wavelet;
c) a processor configured to process extracted feature classifiers associated with plurality of real-time images;
d) a means for combining plurality of feature classifiers of time-space descriptors;
e) a means for evaluating a linear probability of human detection based on predetermined threshold value of feature classifier in a time window having at least one image frame;
f) a counter for counting the number of human in the image; and
g) a transmission means adapted to send the final human detection decision and number thereof in at least one image of real time human tracking to at least one actionable or storage means.

15. The system of claim 14, wherein the sensor comprises of IR sensor, color camera, or at least one interference sensor, the sensors capturing the image information for human detection.
